# EUROPEAN PATENT SPECIFICATION

(11) **EP 1 341 144 B1**
(45) Date of publication and mention of the grant of the patent: **21.06.2006**
(21) Application number: 02425113.4
(22) Date of filing: 01.03.2002
(51) Int. Cl.: G09G 3/28, H02M 3/337

(54) **Power circuit for a plasma display**
Leistungsschaltung einer Plasmaanzeige
Un circuit de puissance pour écran à plasma

(43) Date of publication of application: 03.09.2003
(73) Proprietor: MAGNETEK S.p.A., 52028 Terranuova Bracciolini (Arezzo) (IT)
(72) Inventor: Canova, Antonio, 52025 Montevarchi, Arezzo (IT); Cincinelli, Lorenzo, 52023 Levane, Arezzo (IT); Piazzesi, Mauro, 52028 Terranuova Bracciolioni, Arezzo (IT)
(74) Representative: Mannucci, Michele

(56) References cited:
- WO-A-01/05021
- US-A- 5 267 138
- US-A- 5 963 437
- US-A- 6 002 381
- US-B1- 6 297 976
- M. BARTOLI ET AL: "Off-Line Full-Range High-Frequency High-Efficiency Class D<2> Resonant Power Supply" PROCEEDINGS OF THE INTERNATIONAL CONFERENCE ON INDUSTRIAL ELECTRONICS CONTROL AND INSTRUMENTATION., pages 159 -163 , XP010137393 Bologna

## Description

This invention relates to a power circuit of a plasma television display. The invention also relates to a plasma television containing said circuit and a method for controlling display power via the power circuit.

Plasma televisions have been known in the art for many years and are being increasingly more popular on the market thanks to recent technological perfecting. Patents related to plasma display technology include the following US Patents: 4,130,777; 4,233,623; 4,329,626; 5,808,420; 6,211,867.

Plasma displays present considerable electrical power problems due to their high capacitance load.

Currently, these types of displays are powered by means of PWM converters (generally of the flyback type for generating high voltage and of the forward type for generating low voltage).

The use of this type of converters for powering plasma displays presents considerable problems and shortcomings. Particularly, high dV/dt and dl/dt switching (hard switching) with generation of high frequency harmonics cause problems of electromagnetic interference and the performance is not always high.

US-A-6,297,976 discloses a plasma powering circuit including a resonant converter. The circuit further includes a voltage control loop.

Object of the invention is to provide a power circuit for plasma displays which overcomes the shortcomings of traditional power systems. Additional object of the invention is the realisation of a display for televisions and the like, with a new power circuit.

The above object is achieved with a circuit according to claim 1. The dependent claims refer to further advantageous embodiments of the invention. The invention also relates to a plasma display including such a power circuit.

The power circuit according to the invention includes a resonant converter. A number of advantages are obtained by using a resonant converter to power a plasma display, some of which are listed below:
- the converter MOSFETs switch at zero voltage and zero current (Zero Voltage Switching, Zero Current Switching) which entails highly efficient switching;
- the current waveform is nearly sinusoidal and this entails a considerable reduction of conducted and irradiated noise; minimal electromagnetic shielding is required;
- the circuit is cost-effective and employs a low number of components, because it exploits the parasite capacity of semiconductors (MOSFETs) of the half bridge of the converter and the leakage inductance of the transformer;
- a single winding is used, which additionally simplifies assembly and reduces device weight.

According to the invention, the power circuit comprises a current control loop and a voltage control loop between the load applied to the converter and the converter itself. The loops control the working frequency of the converter. By means of this arrangement it is possible to limit the current output from the power circuit to the display at turn-on, in spite of the high capacitance of the load applied to the converter. Power is voltage controlled when the capacitance of the display is charged at the required voltage. The current control ring will start working again in the event of over-current.

In practice, the current control loop and the voltage control loop are connected to the converter according to an alternative configuration, by which the current control ring is active when a voltage lower than a predetermined value is present between the output terminals of the converter, while the voltage control loop is active when a voltage exceeding said predetermined value is present between the output terminals of the converter. For this purpose, corresponding one-way components, essentially consisting of respective diodes are advantageously arranged on the output of respective operational amplifiers inserted in said two control loops.

Advantageously, the voltage and current control loops are galvanically isolated from the switching control circuit of the converter, e.g. by interposing an optical coupler, i.e. a photocoupler.

The circuit according to the invention can be used to implement a method for powering a plasma display, e.g. a television display, characterised in that: said display is powered by a resonant converter; in that the output current and voltage of said converter are controlled by a current control loop and a voltage control loop, the power current being limited by said current control ring until the output voltage of said converter has reached a predetermined value.

The invention will be better understood by the following description reference being made to the accompanying drawing, which shows a practical non limiting embodiment of the invention. More particularly, in the drawing:
Fig. 1 is a simplified circuit diagram of the power circuit according to the invention applied to a plasma display;
Fig. 2 shows the current and voltage waveform patterns at the power circuit output when the display is turned on;
Fig. 3 shows an embodiment of the circuit according to the invention in greater detail.

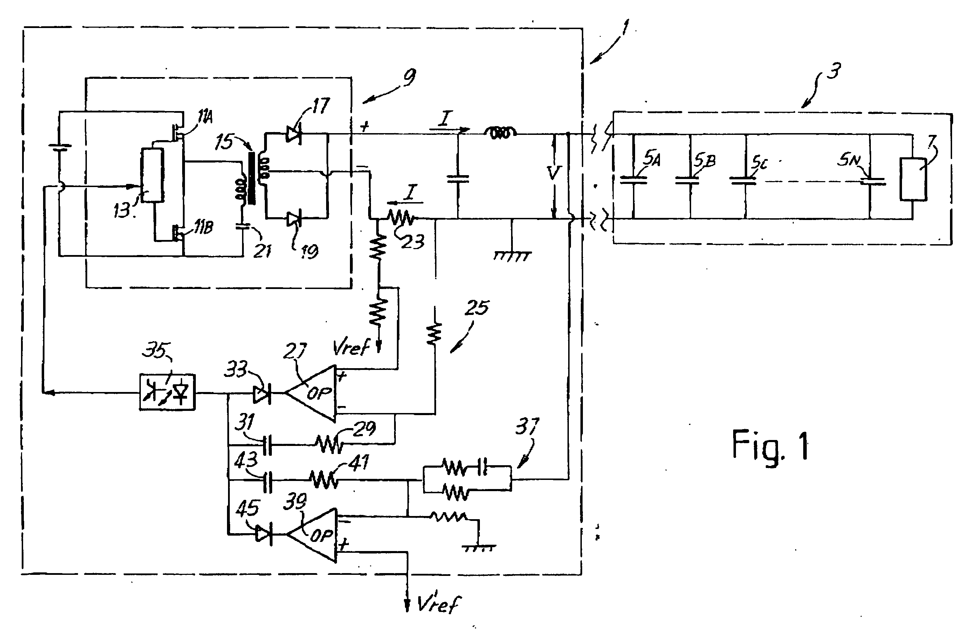

Fig. 1 schematically shows a power circuit of a plasma display according to the invention. The power circuit is generally indicated by reference numeral 1 and the plasma display is generally indicated by reference numeral 3 and schematically illustrated in the form of a capacitive system consisting of the parallel arrangement of a plurality of capacitors 5A, 5B, ... 5N and a generic load 7.

The power circuit 1 comprises a resonant converter in series-parallel configuration, indicated by reference numeral 9. This type of converter is known per se and operation of the device will not be described in detail herein. For a detailed theoretical description of the operation of this type of converter, reference can be made to M.K. Kazimierczuk, *"Class D Voltage Switching Power Inverter",* IEE Proc. Volume 138, Nov. 1991; M.K. Kazimierczuk and W. Szaraniec, "*Class D Voltage Switching Inverter with Only One Shunt Capacitor",* IEE Proc. Volume 139, Sept. 1992; Marian K. Kazimierczuk, Dariusz Czarkowski, *"Resonant Power Converters",* Editor John Wiley & Sons Inc., 1995.

In the diagram in Fig. 1, references 11A and 11B indicate two MOSFETs in half-bridge configuration, whose switching is controlled by a control circuit 13. This may be, for example, an integrated circuit of the lR21571 family made by International Rectifier (USA), or an L6598 integrated circuit made by STM (Italy), or other equivalent circuit. Reference numeral 15 indicates the output transformer and reference numerals 17, 19 indicate the two rectifier diodes on the secondary winding output of the transformer 15. Reference numeral 21 indicates the resonant capacitor in series with the primary winding of the transformer 15. The resonant capacitance in parallel of the primary winding of the transformer 15 is represented by the internal parasite capacitance of the two MOSFETs 11A, 11B.

A current sensor is arranged on the negative output terminal of the converter 9, specifically a reading resistor 23, which reads the current output by the converter 9 to the display 3. The voltage drop at the terminals of the reading resistor 23 is proportional to the current I output by the converter 9 and is used in a current control loop, generally indicated by reference numeral 25, to limit the maximum value of output current.

The current control loop comprises a first operational amplifier 27 to whose inverting terminal a voltage, which is proportional to the voltage upstream to the reading resistor 23, is applied. A reference voltage, determined by the voltage Vref, is applied to the non-inverting terminal of the operational amplifier 27. Reference numerals 29 and 31 indicate a resistor and a capacitor of the reaction branch of the operational amplifier 27, between the inverting terminal and the output. The output of the operational amplifier 27 is connected, via a diode 33, to a photocoupler 35. The output signal of the operational amplifier 27 is thus transmitted to the control circuit 13, for the purposes described below, following galvanic uncoupling.

In addition to the current control loop described above, the power circuit 1 comprises a voltage control loop, generally indicated by reference numeral 37. The loop comprises a second operational amplifier 39, on whose inverting input a voltage, which is proportional to the voltage applied by the converter 9 to the load, i.e. the plasma display 3, is applied. A reference voltage is applied to the non-inverting input of the operational amplifier 39. A reaction branch, comprising a resistor 41 and a capacitor 43, is arranged between the inverting input and output of the operational amplifier 39. Similarly to the output of the first operational amplifier 27, the second operational amplifier output 39 is connected to the photocoupler 35 via a diode 45.

The operation of the circuit described so far is as follows. The capacitors are discharged when the display 3 is turned on. Due to the very high capacitance of the capacitors (in the order of several thousands of µF), the switching of the power circuit would short-circuit the converter 9, with consequent irreversible damage to internal components. The purpose of the current control loop 25 is to avoid this event, by imposing a maximum current value. When the screen is turned on, the output of the first operational amplifier 27 is kept at a low level by the high voltage drop on the reading resistor 23, because the voltage applied to the inverting terminal (voltage upstream to the reading resistor 23) prevails on the reference voltage applied to the non-inverting terminal. Consequently, the diode 33 is switched to conducting and a signal is sent to the control circuit 13 by the photocoupler 35. The signal tends to reduce the switching frequency of the MOSFETs 11 A, 11 B, distancing it from the working frequency, which in turn is higher than the resonance frequency.

Following a current peak output by the power circuit 1 caused by the inevitable delay in the operation of the current control loop 25, the signal output by the first operational amplifier 27 keeps the value of the current I at a constant and controlled level with a gradual increase of output voltage of the first operational amplifier 27 and a consequent reduction of the emission of the photodiode of the photocoupler 35, due to the gradual accumulation of charge in the capacitors of the display 3. The switching frequency of the converter 9 is consequently reduced.

During this initial phase, the output of the second operational amplifier 39 is high and the diode 45 is blocked. Consequently, the voltage control loop 37 is not active.

The capacitors 5A ... 5N of the display 3 are gradually charged as the current controlled by the current control loop 25 flows through the display 3. Consequently, the voltage V between the output terminals of power circuit 1 increases gradually until the voltage applied to the inverting terminal of the second operational amplified 39 prevails on the reference voltage applied to the corresponding non-inverting terminal. Consequently, the output voltage of the second operational amplifier 39 is lowered and the diode 45 switches to conduction. The corresponding increase of the output voltage of the first operational amplifier 27 blocks the diode 33. In this way, the voltage control loop 37 comes into operation while the current control loop 25 is deactivated and the switching frequency of the converter 9 reaches running value.

During normal operation of the device, the switching frequency control and, consequently, the power conditions is governed by the voltage control loop 37, unless an over-current occurs, in which case the current control loop 25 limits the current I to a maximum value.

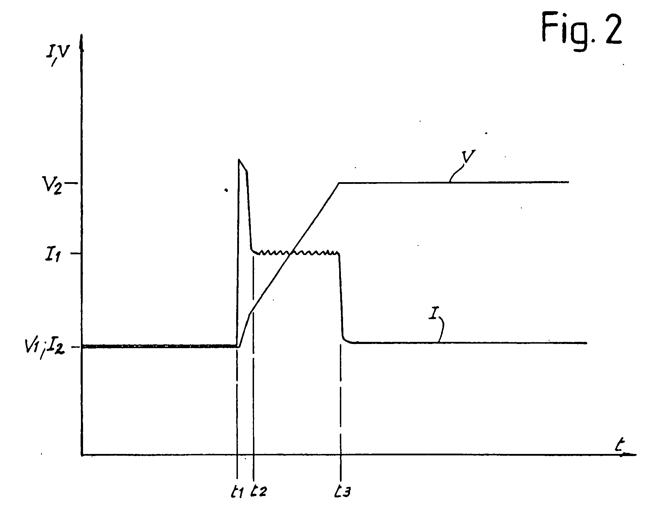

Fig. 2 shows the waveforms of the current I and the voltage V when the display 3 is switched on. The converter is switched on in instant t1. A current peak due to the delay in current control loop operation occurs between instant t1 and t2. Between instant t2 and instant t3, the current I is kept at a level I1 which is essentially constant and is returned to a minimum value 12 in instant t3. At the same time, the voltage V increases from the value V1 to the value V2, which is reached in instant t3 in an essentially linear fashion. Instant t3 is when the running voltage across the capacitors of the display 3 is reached.

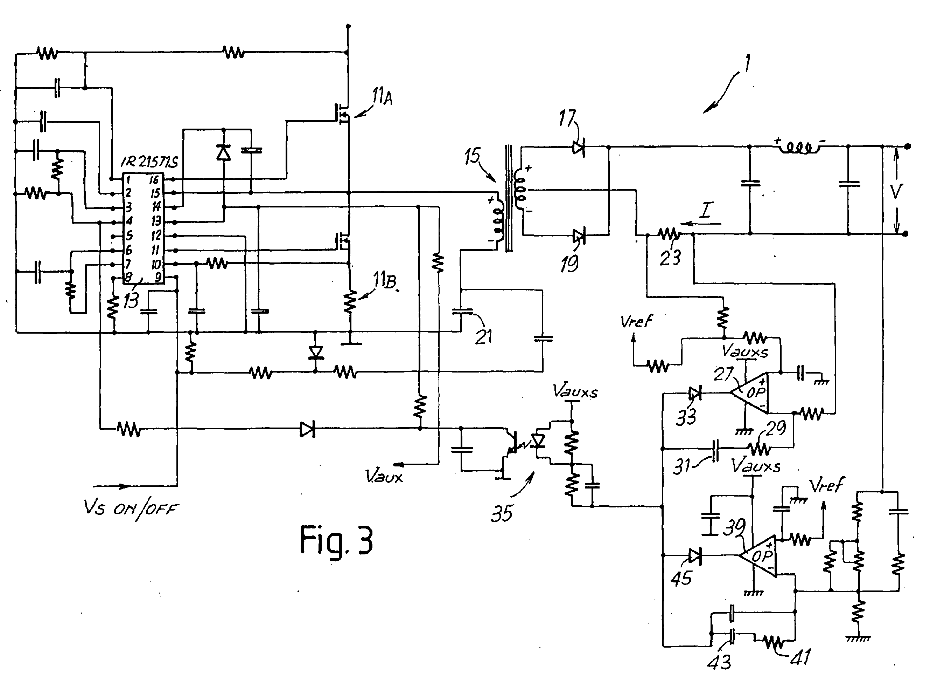

Fig. 3 shows a more detailed circuit diagram of a form of embodiment of the power circuit 1 shown in Fig. 1. Equal reference numerals indicate parts which are either equal or corresponding to those in Fig. 1.

The centre-tapped transformer and the arrangement of the two diodes 17, 19 can clearly be replaced with equivalent arrangements, e.g. by a non-centre-tapped transformer and a diode bridge rectifier.

It should be understood that the drawing shows only a possible embodiment of the invention which may vary in its forms and arrangements without departing from the scope of the concept underlying the invention. The possible presence of reference numbers in the enclosed claims has only the purpose of facilitating the reading of the claims in view of the above description and of the enclosed drawings and does not limit their scope of protection.

## Claims

1. A power circuit for a plasma display comprising a resonant converter (9), including a voltage control loop (37) connected to the output of said converter and adapted to control the working frequency of said converter, **characterised in that**
- said circuit comprises a current control loop (25) connected to the output of the converters adapted to control the working frequency of said converter, and including a current sensor (23) for detecting the current output by said converter (9), a first operational amplifier (27) and a first diode (33), wherein the inverting input of said first operational amplifier is connected to the current sensor, the non-inverting input of the first operational amplifier (27) is connected to a reference voltage, and the output of said first operational amplifier is connected to the cathode of said first diode (33); and
- said voltage control loop (37) comprises a voltage sensor for detecting the voltage output by said converter, a second operational amplifier (39) and a second diode (45); wherein the inverting input of the second operational amplifier is connected to said voltage sensor, the non-inverting input of said second operational amplifier is connected to a reference voltage, and the output of the second operational amplifier is connected to the cathode of said second diode (45).

2. Circuit according to claim 1, **characterised in that** said current control loop (25) and said voltage control loop (37) are connected to the converter in an alternative configuration such that the current control loop is active when a voltage lower than a predetermined value is present between the output terminals of the converter, while the voltage control loop is active when a voltage excessive said predetermined value is present between the output terminals of the converter.

3. Circuit according to claim 1 or 2, **characterised in that** said current control loop (25) and said voltage control loop (37) are connected to the converter via a galvanically isolated coupling (35).

4. Circuit according to claim 3, **characterised in that** said galvanically isolated coupling comprises an optical coupler (35).

5. Circuit according to claim 4, **characterised in that** said galvanically isolated coupling by means of the optical coupler (35) is arranged between said first and second diodes and a switching control circuit (13) of said converter (9).

6. Circuit according to one or more of the previous claims, **characterised in that** said converter is a series-parallel resonant converter.

7. A plasma display with a power circuit according to one or more of the claims from 1 to 6.

## Patentansprüche

1. Leistungsschaltung für ein Plasmadisplay mit einem Resonanzkonverter (9), der eine Spannungssteuerschleife (37) aufweist, die mit dem ungewandelten Ausgang des Resonanzkonverters verbunden ist und so ausgebildet ist, dass sie die Arbeitsfrequenz des Konverters steuern kann, **dadurch gekennzeichnet, dass**
- die Schaltung eine mit dem Ausgang des Konverters verbundene, zur Steuerung der Arbeitsfrequenz des Konverters ausgebildete Stromsteuerschleife (25) aufweist mit einem Stromsensor (23) zum Detektieren des Ausgangsstroms des Konverters (9), einem ersten Operationsverstärker (27) und einer ersten Diode (33), wobei der invertierende Eingang des ersten Operationsverstärkers an den Stromsensor angeschlossen ist, der nicht-invertierende Anschluss des ersten Operationsverstärkers (27) an eine Referenzspannung angeschlossen ist und der Ausgang des ersten Operationsverstärkers an die Kathode der ersten Diode (33) angeschlossen ist; und
- die Spannungssteuerschleife (37) einen Spannungssensor zum Detektieren der Ausgangsspannung des Konverters, einen zweiten Operationsverstärker (39) und eine zweite Diode (45) aufweist; wobei der invertierende Eingang des zweiten Operationsverstärkers an den Spannungssensor angeschlossen ist, der nicht-invertierende Anschluss des zweiten Operationsverstärkers an eine Referenzspannung angeschlossen ist und der Ausgang des zweiten Operationsverstärkers an die Kathode der zweiten Diode (45) angeschlossen ist.

2. Schaltung nach Anspruch 1, **dadurch gekennzeichnet, dass** die Stromsteuerschleife (25) und die Spannungssteuerschleife (37) mit dem Konverter in einer alternativen Konfiguration so verbunden sind, dass die Stromsteuerschleife aktiv ist, wenn eine Spannung, die niedriger als ein vorbestimmter Wert ist, zwischen den Ausgangsanschlüssen des Konverters vorhanden ist, während die Spannungssteuerschleife aktiv ist, wenn eine Spannung, die über dem vorbestimmten Wert liegt, zwischen den Ausgangsanschlüssen des Konverters vorhanden ist.

3. Schaltung nach Anspruch 1 oder 2, **dadurch gekennzeichnet, dass** die Stromsteuerschleife (25) und die Spannungssteuerschleife (37) mit dem Konverter über eine galvanisch isolierte Kopplung (35) verbunden sind.

4. Schaltung nach Anspruch 3, **dadurch gekennzeichnet, dass** die galvanisch isolierte Kopplung einen optischen Koppler (35) aufweist.

5. Schaltung nach Anspruch 4, **dadurch gekennzeichnet, dass** die galvanisch isolierte Kopplung mittels des optischen Kopplers (35) zwischen der ersten und zweiten Diode und einer Schaltsteuerschaltung (13) des Konverters (9) angeordnet ist.

6. Schaltung nach einem oder mehreren der vorstehenden Ansprüche, **dadurch gekennzeichnet, dass** der Konverter ein Reihen-Parallel-Resonanzkonverter ist.

7. Plasmadisplay mit einer Leistungsschaltung gemäß einem oder mehreren der Ansprüche 1 bis 6.

## Revendications

1. Circuit électrique pour un affichage au plasma comprenant un convertisseur résonant (9), comprenant une boucle de commande de tension (37) connectée à la sortie dudit convertisseur et apte à commander la fréquence de travail dudit convertisseur, **caractérisé en ce que**
- ledit circuit comprend une boucle de commande de courant (25) connectée à la sortie de convertisseur, apte à commander la fréquence de travail dudit convertisseur, et incorporant un capteur de courant (23) pour détecter la sortie de courant par ledit convertisseur (9), un premier amplificateur opérationnel (27) et une première diode (33), dans lequel l'entrée d'inversion dudit premier amplificateur opérationnel est connectée au capteur de courant, l'entrée de non- inversion du premier amplificateur opérationnel (27) est connectée à une tension de référence, et la sortie dudit premier amplificateur opérationnel est connectée à la cathode de ladite première diode (33) ; et
- ladite boucle de commande de tension (37) comprend un capteur de tension pour détecter la tension de sortie par ledit convertisseur, un second amplificateur opérationnel (39) et une seconde diode (45) ; dans laquelle l'entrée d'inversion du second amplificateur opérationnel est connectée audit capteur de tension, l'entrée de non - inversion dudit second amplificateur opérationnel est connectée à une tension de référence, et la sortie du second amplificateur opérationnel est connectée à la cathode de ladite seconde diode (45).

2. Circuit selon la revendication 1, **caractérisé en ce que** ladite boucle de commande de courant (25) et ladite boucle de commande de tension (37) sont connectées au convertisseur dans une configuration en variante de telle sorte que la boucle de commande de courant est active lorsqu'une tension inférieure à une valeur prédéterminée est présente entre les bornes de sortie du convertisseur, tandis que la boucle de commande de tension est active lorsqu'une tension excédant ladite valeur prédéterminée est présente entre les bornes de sortie du convertisseur.

3. Circuit selon la revendication 1 ou 2, **caractérisé en ce que** ladite boucle de commande de courant (25) et ladite boucle de commande de tension (37) sont connectées au convertisseur par un couplage (35) isolé par voie galvanique.

4. Circuit selon la revendication 3, **caractérisé en ce que** ledit couplage isolé par voie galvanique comprend un coupleur optique (35).

5. Circuit selon la revendication 4, **caractérisé en ce que** ledit couplage isolé par voie galvanique au moyen du coupleur optique (35) est disposé entre lesdites première et seconde diodes et un circuit de commande de commutation (13) dudit convertisseur (9).

6. Circuit selon une ou plusieurs des revendications précédentes, **caractérisé en ce que** ledit convertisseur est un convertisseur résonant série - parallèle.

7. Affichage au plasma avec un circuit électrique selon une ou plusieurs des revendications 1 à 6.
